(19) **Europäisches Patentamt / European Patent Office / Office européen des brevets**

(11) **EP 4 538 933 A1**

(12) **DEMANDE DE BREVET EUROPEEN**

(43) Date de publication:
**16.04.2025 Bulletin 2025/16**

(21) Numéro de dépôt: **24204356.0**

(22) Date de dépôt: **02.10.2024**

(51) Classification Internationale des Brevets (IPC):
**G06N 3/0495** (2023.01)  **G06N 3/048** (2023.01)
**G06N 3/0464** (2023.01)  G06N 3/10 (2006.01)
**G06N 3/063** (2023.01)

(52) Classification Coopérative des Brevets (CPC):
**G06N 3/0495; G06N 3/0464; G06N 3/048;**
G06N 3/063; G06N 3/09; G06N 3/10

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité: **10.10.2023 FR 2310810**

(71) Demandeur: **STMicroelectronics International N.V.**
**1228 Plan-les-Ouates, Geneva (CH)**

(72) Inventeurs:
• **DEMAJ, Pierre**
  **06200 Nice (FR)**
• **FOLLIOT, Laurent**
  **06620 Gourdon (FR)**

(74) Mandataire: **Casalonga**
**Casalonga & Partners**
**Bayerstraße 71/73**
**80335 München (DE)**

(54) **PROCÉDÉ DE COMPILATION D'UN RÉSEAU DE NEURONES ARTIFICIELS ENTRAÎNÉ**

(57) Selon un aspect, il est proposé un procédé mis en oeuvre par ordinateur de compilation d'un premier réseau de neurones artificiels entraîné, le premier réseau de neurones artificiels entraîné comprenant au moins une succession (SUCC_2) de couches comportant une couche de convolution en profondeur, puis une couche d'unité linéaire rectifiée à saturation, puis une couche de convolution à deux dimensions,
le procédé comprenant :
- une égalisation (13) entre couches,
- un remplacement (15) de la couche d'unité linéaire rectifiée à saturation par une couche de rognage adaptatif par canal de manière à obtenir un réseau de neurones artificiels à topologie modifiée,
- une quantification (16) par tenseur des couches du réseau de neurones artificiels à topologie modifiée,
- une compilation (17) du réseau de neurones artificiels à topologie modifiée et quantifié.

[Fig 5]

EP 4 538 933 A1

**Description**

Des modes de réalisation et de mise en oeuvre concernent les réseaux de neurones artificiels.

Les réseaux de neurones artificiels comprennent généralement une succession de couches de neurones. Chaque couche prend en entrée des données auxquelles des poids sont appliqués et délivre en sortie des données de sortie après traitement par des fonctions d'activation des neurones de ladite couche. Ces données de sortie (également désignées par le terme « activations ») sont transmises à la couche suivante dans le réseau de neurones.

Les poids sont des données, plus particulièrement des paramètres, de neurones configurables pour obtenir de bonnes données en sortie des couches. Les poids d'une couche sont définis dans un tenseur de poids. Le tenseur de poids peut avoir plusieurs canaux.

Les poids sont ajustés lors d'une phase d'apprentissage généralement supervisée, notamment en exécutant le réseau de neurones avec comme données d'entrée des données déjà classifiées d'une base de données de référence. Cette phase d'apprentissage permet d'obtenir un réseau de neurones entraîné.

Les réseaux de neurones artificiels une fois entraînés peuvent être intégrés dans des circuits intégrés, tels que des microcontrôleurs.

En particulier, il est possible d'utiliser un logiciel d'intégration afin d'intégrer un réseau de neurones artificiels dans un circuit intégré. On connaît par exemple le logiciel d'intégration STM32Cube.AI et son extension X-CUBE-AI développés par la société STMicroelectronics.

Par ailleurs, certains circuits intégrés comprennent un circuit dédié au traitement de réseaux de neurones artificiels, également appelés accélérateurs de réseaux de neurones artificiels. Un tel circuit dédié est conçu pour améliorer les performances d'exécution des réseaux de neurones artificiels. Un tel circuit peut notamment être conçu selon une architecture matérielle spécifique pour optimiser les opérations courantes des réseaux de neurones artificiels, telles que les multiplications matricielles, les fonctions d'activation, et les opérations de convolution. Cette architecture permet par exemple des calculs parallèles à haute efficacité. Ainsi, un tel circuit est conçu pour maximiser la performance en termes de vitesse de calcul et d'efficacité énergétique. Cela permet d'accélérer considérablement l'exécution d'un réseau de neurones artificiel.

Par ailleurs, un réseau de neurones artificiels est généralement entraîné en utilisant une représentation en nombres flottants pour ses poids et ses activations. L'utilisation d'une représentation en nombres flottants permet généralement d'obtenir un réseau de neurones artificiels entraîné ayant une meilleure précision.

Néanmoins, les circuits dédiés au traitement de réseaux de neurones artificiels sont généralement configurés pour exécuter des réseaux de neurones quantifiés en entier ou en virgule fixe. Les circuits dédiés au traitement de réseaux de neurones artificiels ne sont généralement pas configurés pour exécuter des réseaux de neurones artificiels utilisant une représentation en nombres flottants.

En particulier, les réseaux de neurones artificiels peuvent être quantifiés pour accélérer leur exécution et réduire les besoins en mémoire. La quantification du réseau de neurones consiste à définir un format de représentation de données du réseau de neurones, tels que les poids ainsi que les entrées et les sorties de chaque couche du réseau de neurones. La quantification permet notamment de passer d'une représentation en nombres flottants à un format en nombre à virgule fixe. Les couches d'un réseau de neurones peuvent être quantifiées en huit bits ou en binaire par exemple. La quantification du réseau de neurones peut être mise en oeuvre par le logiciel d'intégration.

La quantification peut être réalisée pendant la phase d'apprentissage ou bien après la phase d'apprentissage.

La quantification pendant la phase d'apprentissage peut être désignée par l'acronyme « QAT » de l'expression anglaise « Quantization-Aware Training ». La quantification pendant la phase d'apprentissage requiert d'entraîner de nouveau un réseau de neurones artificiel entraîné en simulant la quantification. Une telle quantification est complexe, demande des calculs importants pour effectuer la phase d'apprentissage et peut également requérir un réglage des hyperparamètres. Une telle quantification présente également l'inconvénient de requérir l'ensemble des données d'entraînement. Néanmoins, la quantification pendant la phase d'apprentissage permet de rapprocher les performances du réseau de neurones entraîné quantifié des performances du réseau de neurones entraîné utilisant une représentation en nombres flottants pour ses poids et ses activations.

La quantification réalisée après la phase d'apprentissage peut être désignée par l'acronyme « PTQ » de l'expression anglaise « Post-Training Quantization ». Cette quantification est réalisée à partir d'un réseau de neurones déjà entraîné, et requiert peu de données, voire aucune donnée. Cette quantification requiert également un réglage minimal des hyperparamètres du réseau de neurones artificiels. Cette quantification ne nécessite pas de procéder par la suite à une nouvelle phase d'apprentissage du réseau de neurones artificiels. Cela permet de quantifier plus simplement un réseau de neurones artificiels par rapport à une quantification d'un réseau de neurones artificiels pendant la phase d'apprentissage.

Par ailleurs, la quantification peut être réalisée soit par tenseur, soit par canal.

La quantification par tenseur utilise un seul jeu de paramètres de quantification par tenseur de poids. En d'autres termes, les poids d'un même tenseur partagent la même échelle et un même décalage (en anglais « offset »).

La quantification par canal utilise des jeux de paramètres séparés pour chaque canal de sortie du tenseur de poids. En d'autres termes, les poids d'un même canal d'un tenseur de poids partagent la même échelle et un même décalage mais cette échelle et ce décalage peuvent différer d'un canal à l'autre du tenseur de poids. La quantification par canal permet d'améliorer une granularité de la quantification. Cela permet généralement d'améliorer la précision du réseau de neurones quantifié par rapport à une quantification par tenseur.

Néanmoins, la quantification par canal est complexe à implémenter sur les circuits dédiés au traitement de réseaux de neurones artificiels. En particulier, la quantification par canal peut nécessiter d'effectuer des mises à l'échelle lors de l'utilisation de données n'ayant pas la même échelle. Ainsi, la quantification par tenseur est plus souvent choisie lorsque le réseau de neurones artificiels est intégré dans un circuit intégré, tel qu'un microcontrôleur, utilisant un circuit dédié au traitement de réseaux de neurones.

La publication « A White Paper on Neural Network Quantization », Markus Nagel et al, publiée le 15 juin 2021 sur le site internet arXiv.org, décrit une solution permettant d'améliorer la précision d'un réseau de neurones artificiels quantifié par tenseur pour la rendre proche de la précision d'un réseau de neurones artificiels entraîné utilisant une représentation en nombres flottants. En particulier, la publication décrit un procédé de quantification utilisant une égalisation entre couches (en anglais « cross-layer equalization ») et une absorption de biais (en anglais « bias absorption »).

Néanmoins, la solution proposée par cette publication s'avère insuffisante dans certains cas.

Il existe donc un besoin d'améliorer la quantification par tenseur des réseaux de neurones artificiels.

Selon un aspect, il est proposé un procédé, mis en oeuvre par ordinateur, de compilation d'un premier réseau de neurones artificiels entraîné, le premier réseau de neurones artificiels entraîné comprenant au moins une succession de couches comportant une couche de convolution en profondeur, puis une couche d'unité linéaire rectifiée à saturation, puis une couche de convolution à deux dimensions,
le procédé comprenant :

- une égalisation entre la couche de convolution en profondeur et la couche de convolution à deux dimensions,
- un remplacement de la couche d'unité linéaire rectifiée à saturation par une couche de rognage adaptatif par canal de manière à obtenir un réseau de neurones artificiels à topologie modifiée,
- une quantification par tenseur des couches du réseau de neurones artificiels à topologie modifiée,
- une compilation du réseau de neurones artificiels à topologie modifiée et quantifié de manière à générer un programme d'ordinateur comprenant des instructions qui, lorsque le programme est exécuté par un ordinateur, conduisent celui-ci à mettre en oeuvre le réseau de neurones artificiels à topologie modifiée et quantifié.

La couche de rognage adaptatif par canal permet d'éviter d'utiliser une couche d'unité linéaire rectifiée à saturation, tout en préservant le comportement initial du réseau de neurones artificiels.

Le procédé de compilation permet ainsi de réaliser une quantification par tenseur après entraînement du réseau de neurones artificiels tout en limitant la perte de précision du réseau de neurones artificiels quantifié par rapport au réseau de neurones artificiels entraîné utilisant une représentation en nombres flottants pour ses poids et ses activations.

Une telle quantification par tenseur après entraînement du réseau de neurones artificiels présente l'avantage de pouvoir être réalisé sans nécessité l'ensemble des données utilisées pour effectuer l'entraînement.

Une telle quantification par tenseur présente l'avantage de pouvoir être implémenté simplement par rapport à une quantification pendant la phase d'apprentissage.

Dans un mode de réalisation avantageux, la couche de rognage adaptatif par canal est adaptée selon une valeur de saturation définie pour la couche d'unité linéaire rectifiée à saturation.

De préférence, la couche de rognage adaptatif par canal est configurée pour rogner chaque canal du tenseur d'activations généré par la couche de convolution en profondeur entre une valeur minimale égale à 0 et une valeur maximale calculée en appliquant la formule : $\text{max\_val} = X \times s_i^{-1}$, où max_val est la valeur maximale, X est une valeur de saturation définie par la couche d'unité

$$s_i = \frac{1}{r_i^{(2)}} \sqrt{r_i^{(1)} r_i^{(2)}}$$

linéaire rectifiée à saturation et $r_i^{(1)}$ correspond à la plage de valeurs du canal $i$ d'un tenseur de poids de la couche de convolution en profondeur et $r_i^{(2)}$ correspond à la plage de valeurs du canal $i$ d'un tenseur de poids de la couche de convolution à deux dimensions.

Dans un mode de mise en oeuvre avantageux, le procédé comprend également une absorption de biais entre la couche de convolution en profondeur et la couche de convolution à deux dimensions.

Avantageusement, le procédé comprend en outre :

- une obtention d'un réseau de neurones artificiels entraîné initial comprenant au moins une succession de couches comportant une couche de convolution en profondeur, puis une première couche de normalisation par lot, puis une couche d'unité linéaire rectifiée à saturation, puis une couche de convolution à deux dimensions, puis éventuellement une deuxième couche de normalisation par lot,

- une fusion de la première couche de normalisation par lot du réseau de neurones artificiels entraîné initial avec la couche de convolution en profondeur, et éventuellement une fusion de la deuxième couche de normalisation par lot avec la couche de convolution à deux dimensions, de manière à obtenir ledit premier réseau de neurones artificiels entraîné.

Selon un autre aspect, il est proposé un produit programme d'ordinateur de compilation comprenant des instructions qui, lorsque le programme est exécuté par un ordinateur, conduisent celui-ci à mettre en oeuvre un procédé de compilation tel que décrit précédemment.

Selon un autre aspect, il est proposé un réseau de neurones artificiels quantifié et entraîné comprenant au moins une succession de couches comportant une couche de convolution en profondeur, puis une couche de rognage adaptatif par canal, puis une couche de convolution à deux dimensions,

Selon un autre aspect, il est proposé un système informatique comprenant :

- une mémoire stockant un produit programme d'ordinateur de compilation tel que décrit précédemment,
- une unité principale de traitement configurée pour exécuter ledit programme d'ordinateur de compilation.

Selon un autre aspect, il est proposé un support de données lisible par ordinateur, sur lequel est enregistré le produit programme d'ordinateur de compilation tel que décrit précédemment.

Selon un autre aspect, il est proposé un produit programme d'ordinateur comprenant des instructions qui, lorsque le programme est exécuté par un ordinateur, conduisent celui-ci à mettre en oeuvre un réseau de neurones artificiels à topologie modifiée et quantifié obtenu selon un procédé de compilation tel que décrit précédemment.

Selon un autre aspect, il est proposé un microcontrôleur comprenant :

- une mémoire stockant un produit programme d'ordinateur tel que décrit précédemment pour exécuter un réseau de neurones artificiels à topologie modifiée et quantifié,
- une unité principale de traitement configurée pour exécuter ledit programme d'ordinateur.

Dans un mode de réalisation avantageux, le microcontrôleur comprend en outre un circuit dédié au traitement de réseaux de neurones configuré pour exécuter le réseau de neurones artificiels à topologie modifiée et quantifié.

Selon un autre aspect, il est proposé un support de données lisible par ordinateur, sur lequel est enregistré le produit programme d'ordinateur tel que décrit précédemment pour exécuter un réseau de neurones artificiels à topologie modifiée et quantifié.

D'autres avantages et caractéristiques de l'invention apparaîtront à l'examen de la description détaillée de modes de réalisation, nullement limitatifs, et des dessins annexés sur lesquels :

[Fig 1]
[Fig 2]
[Fig 3]
[Fig 4]
[Fig 5]

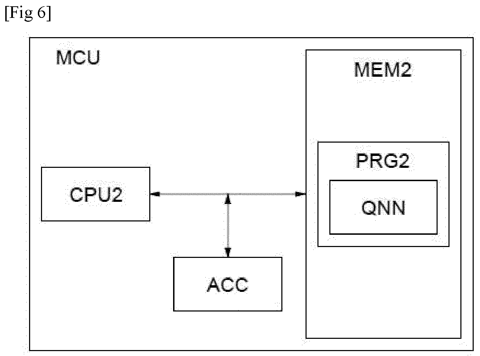

[Fig 6] illustrent des modes de réalisation et de mise en oeuvre de l'invention.

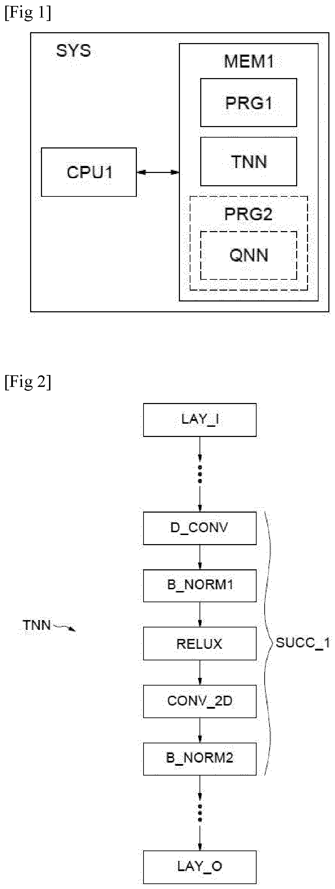

La figure 1 illustre un mode de réalisation d'un système informatique SYS. Le système informatique SYS comprend une unité principale de traitement CPU1 et une mémoire MEM1. La mémoire MEM1 stocke un programme d'ordinateur de compilation PRG1 comprenant des instructions qui, lorsque le programme est exécuté par l'unité principale de traitement CPU1, conduisent celle-ci à mettre en oeuvre un procédé de compilation d'un réseau de neurones artificiels tel que décrit ci-après en relation avec la figure 2.

Le programme d'ordinateur de compilation PRG1 peut être compris dans un logiciel d'intégration. Le logiciel d'intégration est configuré pour intégrer un réseau de neurones quantifié dans un circuit intégré.

La figure 2 illustre un mode de mise en oeuvre d'un procédé de compilation d'un réseau de neurones artificiels. Ce procédé peut être mis en oeuvre par l'exécution du programme d'ordinateur de compilation PRG1.

Le procédé comprend une obtention 10 du réseau de neurones artificiels entraîné TNN. Le réseau de neurones artificiels entraîné TNN peut être fourni en entrée du logiciel d'intégration.

Le réseau de neurones artificiels entraîné TNN comprend une succession de couches de neurones. Chaque couche prend en entrée des données auxquelles des poids sont appliqués et délivre en sortie des données de sortie après traitement par des fonctions d'activation des neurones de ladite couche. Ces données de sortie (également désignées par le terme « activations ») sont transmises à la couche suivante dans le réseau de neurones. En particulier, le réseau de neurones artificiels entraîné TNN comprend alors une couche d'entrée LAY_I configurée pour recevoir des données en entrée du réseau de neurones artificiels TNN et une couche de sortie LAY_O configurée pour générer des données en sortie du réseau de neurones artificiels TNN.

Les poids d'une couche sont définis dans un tenseur de poids. Le tenseur de poids peut avoir plusieurs canaux. Les poids sont des données, plus particulièrement des paramètres, de neurones configurables pour obtenir de bonnes données en sortie des couches.

Les poids sont ajustés lors d'une phase d'apprentissage généralement supervisée, notamment en exécutant le réseau de neurones avec comme données d'entrée des données déjà classifiées d'une base de données de référence. Cette phase d'apprentissage permet d'obtenir un réseau de neurones entraîné.

L'entraînement sert à définir un réseau de neurones dont les performances sont optimales. Plus particulièrement, lors de l'entraînement du réseau de neurones, les poids du réseau de neurones sont ajustés, puis les performances du réseau modifié sont évaluées. Si les performances du réseau de neurones sont satisfaisantes, l'entraînement du réseau est arrêté.

Le réseau de neurones entraîné peut utiliser une représentation en nombres à virgule flottante pour les poids et les données (activations) générées par chaque couche du réseau de neurones.

Le réseau de neurones entraîné présente un format connu par l'homme du métier. Par exemple, le réseau de neurones entraîné peut être obtenu à partir d'un logiciel de conception de réseau de neurones artificiels, tel que Keras, Tensorflow et ONNX (acronyme de l'anglais « Open Neural Network Exchange »)

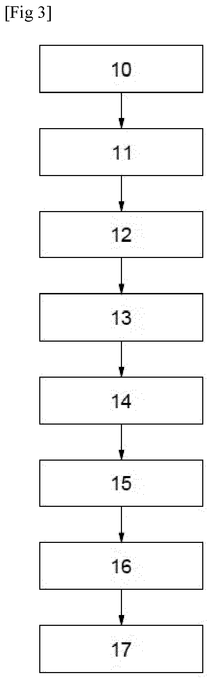

Comme illustré à la figure 3, le réseau de neurones artificiels comprend au moins une succession SUCC_1 de couches, dite succession de couches d'intérêt, comportant une couche de convolution en profondeur D_CONV (en anglais « depthwise convolution »), puis une première couche de normalisation par lot B_NORM1, puis une couche d'unité linéaire rectifiée à saturation RELUX, puis une couche de convolution à deux dimensions CONV_2D puis éventuellement une seconde couche de normalisation par lot B_NORM2. À la figure 3, seule une succession SUCC_1 de couches d'intérêt est représentée. Néanmoins, le réseau de neurones artificiels peut comprendre plusieurs successions de couches d'intérêt comme celle illustrée à la figure 3.

La couche de convolution en profondeur D_CONV est configurée pour appliquer un noyau de convolution à chaque canal d'entrée de la couche de convolution en profondeur. Un noyau de convolution est donc défini pour chaque canal d'entrée de la couche de convolution en profondeur.

La première couche de normalisation par lot B_NORM1 est configurée pour normaliser les activations du tenseur qu'elle reçoit en entrée. En particulier, la couche de normalisation par lot est configurée pour calculer une moyenne et un écart-type des activations, puis pour normaliser les activations en les soustrayant de la moyenne calculée et en les divisant par l'écart-type calculé. La première couche de normalisation par lot est utilisée pour réduire des effets de dérive d'une distribution des activations pendant la phase d'apprentissage du réseau de neurones artificiels. La première couche de normalisation par lot est également utilisée pour accélérer une convergence lors de l'entraînement. Une telle convergence plus rapide signifie que le réseau de neurones artificiels peut être entraîné plus rapidement. Cela permet également de diminuer un phénomène de surajustement. Le surajustement correspond à un ajustement du réseau de neurones artificiel lors de l'entraînement est trop lié aux données d'entraînement (par exemple des images d'entraînement). Un tel surajustement peut entraîner une baisse de précision du réseau de neurones artificiel lorsqu'il est exécuté avec des données d'entrée différentes des données d'entraînement (par exemple de nouvelles images). En d'autres termes, le surajustement fait perdre la capacité d'un réseau de neurones artificiels à se généraliser pour des données différentes de celles utilisées pour l'entraînement.

La couche d'unité linéaire rectifiée à saturation RELUX permet d'introduire une non-linéarité dans le réseau de neurones artificiels. Une telle non-linéarité permet au réseau de neurones artificiels d'apprendre des fonctions complexes.

En particulier, la couche d'unité linéaire rectifiée à saturation est configurée pour exécuter la fonction suivante :

$ReLUX(z) = \min(\max(0, z), X)$, où z correspond à une sortie de la première couche de normalisation par lot sur le canal i, ReLUX(z) correspond à une activation du tenseur de sortie de la première couche de normalisation par lot sur le canal i, et X correspond à la valeur de saturation.

En d'autres termes, la couche d'unité linéaire rectifiée à saturation RELUX permet de générer un tenseur de sortie dans lequel les valeurs des activations de chaque canal du tenseur de sortie correspondent à la valeur minimale entre la valeur de saturation X définie et la valeur maximale entre 0 et la valeur correspondante des activations du canal associé du tenseur d'entrée.

Par exemple, la couche d'unité linéaire rectifiée à saturation à 6 (« ReLU6 ») est configurée pour exécuter la fonction suivante :

$ReLU6(z) = \min(\max(0, z), 6)$, où z correspond à une sortie de la première couche de normalisation par lot sur le canal i, ReLU6(z) correspond à une activation du tenseur de sortie de la première couche de normalisation par lot sur le canal i, et 6 correspond à la valeur de saturation.

La couche de convolution à deux dimensions CONV_2D est configurée pour appliquer un même noyau de convolution sur l'ensemble des canaux du tenseur d'activations que cette couche de convolution à deux dimensions reçoit en entrée.

De manière similaire à la première couche de normalisation par lot B_NORM1, la seconde couche de normalisation par lot B_NORM2 est configurée pour normaliser les activations du tenseur qu'elle reçoit en entrée. En particulier, la couche de normalisation par lot est configurée pour calculer une moyenne et un écart-type des activations, puis pour normaliser les activations en les soustrayant de la moyenne calculée et en les divisant par l'écart-type calculé. La deuxième couche de normalisation par lot est utilisée pour réduire des effets de dérive d'une distribution des activations pendant la phase d'apprentissage du réseau de neurones artificiels. La deuxième couche de normalisation par lot est également utilisée pour accélérer une convergence lors de l'entraînement. Une telle convergence plus rapide signifie que le réseau de neurones artificiels peut être entraîné plus rapidement. Cela permet également de diminuer le phénomène de surajustement.

Le procédé de compilation comprend une détection 11 de ladite au moins une succession SUCC_1 de couches d'intérêt. Dans cette étape, l'unité principale de traitement CPU1 détecte chaque succession SUCC_1 de couches d'intérêt, qui comprend donc une couche de convolution en profondeur D_CONV, puis une première couche de normalisation par lot B_NORM1, puis une couche d'unité linéaire rectifiée à saturation RELUX, puis une couche de convolution à deux dimensions CONV_2D puis éventuellement une seconde couche de normalisation par lot B_NORM2. Cette détection est effectuée à partir des informations associées à chaque couche du réseau de neurones artificiels entraîné.

Ensuite, l'unité principale de traitement CPU1 réalise les étapes 12 à 15 décrite dans la suite pour chaque succession SUCC_1 de couches d'intérêt détectée.

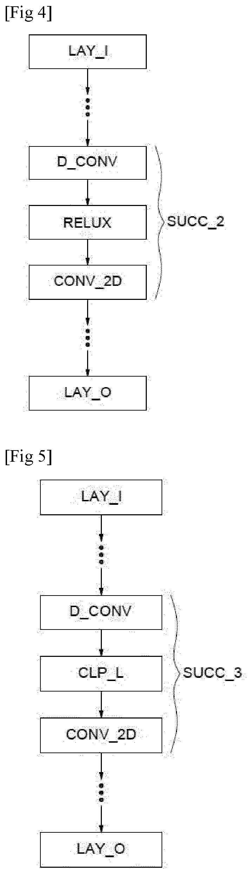

En particulier, le procédé comprend une étape 12 de fusion des couches de normalisation par lot B_NORM1, B_NORM2 avec les couches D_CONV, CONV_2D qui les précédent. Cette étape 12 est réalisée par l'unité principale de traitement CPU1. Cette fusion peut être désignée par l'expression anglaise « batch normalization folding ». La fusion permet de supprimer les opérations de chaque couche de normalisation par lot dans le réseau de neurones artificiels, de manière à obtenir une succession SUCC_2 de couches, comme illustrée à la figure 4. En particulier, les opérations de chaque couche de normalisation par lot sont intégrées dans la couche qui précède cette couche de normalisation par lot. Cela permet de réduire le nombre de calculs requis pour effectuer chaque couche de normalisation par lot.

En particulier, les poids et les biais associés à la couche qui précède chaque couche de normalisation par lot sont recalculés de manière à intégrer les opérations de la couche de normalisation par lot. Plus particulièrement, les poids de ladite couche qui précède la couche de normalisation par lot sont calculés en utilisant la fonction suivante :

$$\widetilde{W_k} = \frac{\gamma_k W_k}{\sqrt{\sigma_k^2 + \varepsilon}}$$

, où $\gamma_k$ est un hyperparamètre dont la valeur est définie par entraînement, $W_k$ est la valeur de l'ancien poids, $\sigma$ est la variance calculée pendant l'entraînement et $\varepsilon$ est une constante prédéfinie.

Les biais de ladite couche qui précède la couche de normalisation par lot sont calculés en utilisant la fonction suivante :

$$\widetilde{b_k} = \frac{\gamma_k}{\sqrt{\sigma_k^2 + \varepsilon}}(b_k - \mu_k) + \beta_k$$

, où $b_k$ est la valeur initiale du biais, $\beta_k$ est un premier hyperparamètre de la couche de normalisation par lot dont la valeur est définie par entraînement, $\gamma_k$ est un deuxième paramètre de la couche de normalisation par lot, $\mu_k$ est la moyenne calculée pendant l'entraînement, $\sigma_k$ est la variance calculée pendant l'entraînement et $\varepsilon$ est une constante prédéfinie.

Le procédé comprend ensuite une étape 13 d'égalisation entre couches (en anglais « cross-layer equalization »). Cette étape 13 d'égalisation est réalisée par l'unité principale de traitement CPU1. L'étape 13 d'égalisation entre couches correspond à la méthode décrite dans la publication « A White Paper on Neural Network Quantization », Markus Nagel et al, 15 juin 2021.

L'égalisation entre couches est configurée pour adapter les poids et les biais de deux couches consécutives d'un réseau de neurones artificiels, par exemple entre la couche de convolution en profondeur D_CONV et la couche de convolution à deux dimensions CONV_2D, séparées par la couche d'unité linéaire rectifiée à saturation RELUX.

En particulier, pour deux couches consécutives du réseau de neurones artificiels, le tenseur d'activations de sortie de la première couche peut être défini par l'expression.

$h = f(W^{(1)}x + b^{(1)})$, où $f$ est la fonction d'activation de la première couche, $W^{(1)}$ est le tenseur de poids initial de la première couche, x correspond au tenseur d'activations en entrée de la première couche et $b^{(1)}$ est le tenseur de biais de la première couche.

Le tenseur d'activations de sortie de la deuxième couche peut être défini par l'expression.

$y = f(W^{(2)}h + b^{(2)})$, où $f$ est la fonction d'activation de la deuxième couche, $W^{(2)}$ est le tenseur de poids initial de la deuxième couche, h correspond au tenseur d'activations en entrée de la deuxième couche et $b^{(2)}$ est le tenseur de biais de la deuxième couche.

En appliquant l'égalisation entre couches il est possible de redéfinir les tenseur de poids des deux couches successives de sorte que $y = f(\bar{W}^{(2)}\hat{f}(\bar{W}^{(1)}x + \tilde{b}^{(1)}) + b^{(2)})$, où $\bar{W}^{(2)} = W^{(2)}S$ correspond au nouveau tenseur de poids de la deuxième couche, $\bar{W}^{(1)} = S^{-1}W^{(1)}$ correspond au nouveau tenseur de poids de la première couche, $\tilde{b}^{(1)} = S^{-1}b^{(1)}$ correspond au nouveau tenseur de biais de la première couche, $\hat{f}$ correspond à la fonction de rognage adaptatif décrite ci-après, et où $S = diag(s)$ est une matrice diagonale dont les valeurs $S_{ii}$ correspondent au facteur d'échelle $s_i$.

En particulier, le facteur d'échelle $s_i$ est défini pour égaliser les plages de valeurs entre différentes couches successives. Plus particulièrement, le facteur d'échelle $s_i$ est obtenu par la formule :

$$s_i = \frac{1}{r_i^{(2)}} \sqrt{r_i^{(1)} r_i^{(2)}},$$

où $r_i^{(1)}$ correspond à la plage de valeurs du canal i d'un tenseur de poids de la couche de convolution en profondeur et $r_i^{(2)}$ correspond à la plage de valeurs du canal i d'un tenseur de poids de la couche de convolution à deux dimensions.

Un tel facteur d'échelle permet d'améliorer une robustesse de la quantification en réduisant un bruit de quantification.

L'égalisation entre couches permet d'éviter un problème de différence de magnitude entre les éléments d'un même tenseur. Ce problème apparaît notamment souvent lorsqu'une couche de convolution en profondeur est utilisée. L'égalisation entre couches permet ainsi de réduire une perte de précision pouvant résulter d'une quantification par tenseur.

Le procédé comprend ensuite une étape 14 d'absorption de biais (en anglais « bias absorption »). Cette étape 14 d'absorption de biais est réalisée par l'unité principale de traitement CPU1. L'étape 14 d'absorption de biais correspond à la méthode décrite dans la publication « A White Paper on Neural Network Quantization », Markus Nagel et al, 15 juin 2021.

L'absorption de biais est configurée pour modifier les paramètres afin d'absorber les biais, en utilisant la formule suivante :

$$y = W^{(2)} \tilde{h} + \tilde{b}^{(2)},$$

où $\tilde{b}^{(2)} = W^{(2)} c_i + b^{(2)}$, $\tilde{h} = h - c_i$, $\tilde{b}^{(1)} = b^{(1)} - c_i$

où $c_i$ = max $(0, \beta_i - 3\gamma_i)$, $\beta_i$ et $\gamma_i$ étant deux hyperparamètres de la couche de normalisation par lot BNORM1 pour le canal *i*. La valeur '3' peut également être ajustée à partir de simulation en extrayant des statistiques des activations.

Par ailleurs, si la couche d'unité linéaire rectifiée à saturation entraîne fréquemment des saturations, alors l'égalisation entre couches peut être insuffisante pour éviter une perte de précision résultant de la quantification par tenseur.

Pour répondre à ce problème, le procédé comprend ensuite une étape 15 de remplacement de la couche d'unité linéaire rectifiée à saturation. Cette étape 15 est réalisée par l'unité principale de traitement CPU1. Dans cette étape, la couche d'unité linéaire rectifiée à saturation est remplacée par une couche CPL_L de rognage adaptatif par canal, de manière à obtenir une succession SUCC_3 de couches, comme illustrée à la figure 5. Cette étape entraîne donc une modification de la topologie du réseau de neurones artificiels.

La couche CPL_L de rognage adaptatif par canal est configurée pour rogner le tenseur de sortie de la couche de convolution en profondeur.

En particulier, chaque canal du tenseur généré par la couche de convolution en profondeur est rogné indépendamment entre une valeur minimale et une valeur maximale. La valeur minimale est définie à 0. La valeur maximale est calculée selon la formule suivante : max_val = $X \times s_i^{-1}$, où max_val est la valeur maximale, X est la valeur de saturation définie par la couche d'unité linéaire rectifiée à saturation remplacée et $s_i$ est la valeur calculée pour l'égalisation entre couches pour le canal *i*.

La couche de rognage adaptatif par canal permet d'éviter d'utiliser une couche d'unité linéaire rectifiée à saturation, tout en préservant le comportement initial du réseau de neurones artificiels.

Le procédé comprend ensuite une étape 16 de quantification par tenseur des couches du réseau de neurones artificiels. Cette étape 16 est réalisée par l'unité principale de traitement CPU1.

Ainsi, un tel procédé permet d'obtenir un réseau de neurones artificiels QNN entraîné et quantifié ayant une précision proche du réseau de neurones artificiels entraîné utilisant une représentation en nombres flottants pour ses poids et ses activations.

Le procédé comprend ensuite une étape 17 de compilation du réseau de neurones artificiels QNN entraîné et quantifié. Cette étape 17 est réalisée par l'unité principale de traitement CPU1. Cette étape 17 permet de générer un programme d'ordinateur PRG2 comprenant des instructions qui, lorsque le programme est exécuté par un ordinateur, conduisent celui-ci à mettre en oeuvre le réseau de neurones artificiels QNN quantifié obtenu. En particulier, le programme d'ordinateur QNN peut comprendre des instructions pour que le réseau de neurones artificiels quantifié puisse être exécuté par un circuit dédié au traitement de réseau de neurones artificiels. Ce programme d'ordinateur PRG2 est alors stocké dans la mémoire MEM1 du système informatique SYS.

Ce programme d'ordinateur PRG2 peut ensuite être intégré dans un circuit intégré, tel qu'un microcontrôleur MCU. Le circuit intégré peut alors mettre en oeuvre le réseau de neurones artificiels QNN quantifié en exécutant les instructions dudit programme d'ordinateur PRG2.

Le procédé de compilation précédemment décrit permet de réaliser une quantification par tenseur après entraînement du réseau de neurones artificiels tout en limitant la perte de précision du réseau de neurones artificiels quantifié par rapport au réseau de neurones artificiels entraîné utilisant une représentation en nombres flottants pour ses poids et ses activations.

Une telle quantification par tenseur après entraînement du réseau de neurones artificiels présente l'avantage de pouvoir être réalisé sans nécessité l'ensemble des données utilisées pour effectuer l'entraînement. Une quantité limitée de données utilisées pour effectuer l'entraînement pourra tout de même être requise pour calibrer les sorties de couches et des activations.

Une telle quantification par tenseur présente l'avantage de pouvoir être implémenté simplement par rapport à une quantification pendant l'entraînement.

En outre, la topologie modifiée du réseau de neurones artificiels a peu d'impact sur le temps d'exécution du réseau de neurones artificiels et sur la quantité de données devant être stockée dans une mémoire flash du circuit intégré intégrant le réseau de neurones artificiels.

Bien entendu, le mode de mise en oeuvre du procédé de compilation précédemment décrit est susceptible de diverses variantes et modifications qui apparaîtront à l'homme de l'art. En particulier, l'unité de traitement peut effectuer les étapes 13 à 15 que pour certaines successions de couches d'intérêt. En particulier, le programme d'ordinateur PRG1 peut être configuré pour déterminer quelles successions de couches d'intérêt sont susceptibles de comprendre une couche d'unité linéaire rectifiée à saturation dont la fréquence de saturation lors de l'exécution du réseau de neurones entraîné est supérieure à un seuil prédéfini. Plus particulièrement, la saturation peut être évaluée en exécutant le réseau de neurones artificiels entraîné en utilisant des données d'entrée déjà utilisées lors de la phase d'apprentissage du réseau de neurones artificiels. Le programme d'ordinateur PRG1 peut alors être configuré pour effectuer les étapes 13 à 15 uniquement pour les successions SUCC_1 de couches d'intérêt susceptible de comprendre une couche d'unité linéaire rectifiée à saturation dont la fréquence de saturation lors de l'exécution du réseau de neurones entraîné est supérieure à un seuil prédéfini. Le programme d'ordinateur PRG1 peut aussi être configuré pour modifier la couche d'unité linéaire rectifiée à saturation des autres successions SUCC_1 de couches d'intérêt par une couche d'unité linéaire rectifié sans saturation (c'est-à-dire de type « ReLU »).

La figure 6 illustre un mode de réalisation d'un microcontrôleur MCU configuré pour exécuter un réseau de neurones artificiels quantifié QNN obtenu par le procédé décrit précédemment en relation avec la figure 3.

Le microcontrôleur comprend une unité de traitement principale CPU2, une mémoire MEM2, et un circuit ACC dédié au traitement de réseaux de neurones artificiels. La mémoire MEM2 stocke un programme d'ordinateur PRG2 comprenant des instructions qui, lorsque le programme est exécuté par le circuit ACC dédié au traitement de réseaux de neurones, conduisent celui-ci à mettre en oeuvre ledit réseau de neurones artificiels quantifié QNN.

**Revendications**

**1.** Procédé, mis en oeuvre par ordinateur, de compilation d'un premier réseau de neurones artificiels entraîné, le premier réseau de neurones artificiels entraîné comprenant au moins une succession (SUCC_2) de couches comportant une couche de convolution en profondeur (D_CONV), puis une couche d'unité linéaire rectifiée à saturation (RELUX), puis une couche de convolution à deux dimensions (CONV_2D),
le procédé comprenant :

- une égalisation (13) entre la couche de convolution en profondeur (D_CONV) et la couche de convolution à deux dimensions (CONV_2D),
- un remplacement (15) de la couche d'unité linéaire rectifiée à saturation (RELUX) par une couche de rognage adaptatif par canal (CLP_L) de manière à obtenir un réseau de neurones artificiels à topologie modifiée,
- une quantification (16) par tenseur des couches du réseau de neurones artificiels à topologie modifiée,
- une compilation (17) du réseau de neurones artificiels à topologie modifiée et quantifié (QNN) de manière à générer un programme d'ordinateur (PRG2) comprenant des instructions qui, lorsque le programme est exécuté par un ordinateur, conduisent celui-ci à mettre en oeuvre le réseau de neurones artificiels à topologie modifiée et quantifié (QNN).

**2.** Procédé selon la revendication 1, dans lequel la couche de rognage adaptatif par canal (CPL_L) est adaptée selon une valeur de saturation définie pour la couche d'unité linéaire rectifiée à saturation.

**3.** Procédé selon la revendication 2, dans lequel la couche de rognage adaptatif par canal est configurée pour rogner chaque canal du tenseur d'activations généré par la couche de convolution en profondeur entre une valeur minimale égale à 0 et une valeur maximale calculée en appliquant la formule : max_val = $X \times s_i^{-1}$, où max_val est la valeur maximale, X est une valeur de saturation définie par la couche d'unité linéaire rectifiée à saturation et

$$s_i = \frac{1}{r_i^{(2)}} \sqrt{r_i^{(1)} r_i^{(2)}}$$

, où $r_i^{(1)}$ correspond à la plage de valeurs du canal $i$ d'un tenseur de poids de la couche de convolution en profondeur et $r_i^{(2)}$ correspond à la plage de valeurs du canal i d'un tenseur de poids de la couche de convolution à deux dimensions.

**4.** Procédé selon l'une des revendications 1 à 3 comprenant également une absorption (14) de biais entre la couche de convolution en profondeur (D_CONV) et la couche de convolution à deux dimensions (CONV_2D).

**5.** Procédé selon l'une des revendications 1 à 4, comprenant :

- une obtention (10) d'un réseau de neurones artificiels entraîné initial (TNN) comprenant au moins une succession (SUCC_1) de couches comportant une couche de convolution en profondeur (D_CONV), puis une première couche de normalisation par lot (B_NORM1), puis une couche d'unité linéaire rectifiée à saturation (RELUX), puis une couche de convolution à deux dimensions (CONV_2D), puis éventuellement une deuxième couche de normalisation par lot (B_NORM2),

- une fusion (12) de la première couche de normalisation par lot du réseau de neurones artificiels entraîné initial avec la couche de convolution en profondeur, et éventuellement une fusion de la deuxième couche de normalisation par lot avec la couche de convolution à deux dimensions, de manière à obtenir ledit premier réseau de neurones artificiels entraîné.

6. Produit programme d'ordinateur de compilation (PRG1) comprenant des instructions qui, lorsque le programme est exécuté par un ordinateur, conduisent celui-ci à mettre en oeuvre un procédé de compilation selon l'une des revendications 1 à 5.

7. Système informatique comprenant :

- une mémoire (MEM1) stockant un produit programme d'ordinateur de compilation selon la revendication 6,
- une unité principale de traitement (CPU1) configurée pour exécuter ledit programme d'ordinateur de compilation.

8. Support de données lisible par ordinateur, sur lequel est enregistré le produit programme d'ordinateur de compilation (PRG1) selon la revendication 6.

9. Produit programme d'ordinateur (PRG2) comprenant des instructions qui, lorsque le programme est exécuté par un ordinateur, conduisent celui-ci à mettre en oeuvre un réseau de neurones artificiels à topologie modifiée et quantifié (QNN) obtenu selon un procédé de compilation selon l'une des revendications 1 à 5.

10. Microcontrôleur comprenant :

- une mémoire (MEM2) stockant un produit programme d'ordinateur (PRG2) selon la revendication 9,
- une unité principale de traitement (CPU2) configurée pour exécuter ledit programme d'ordinateur (PRG2).

11. Microcontrôleur selon la revendication 10, comprenant en outre un circuit (ACC) dédié au traitement de réseaux de neurones configuré pour exécuter le réseau de neurones artificiels à topologie modifiée et quantifié (QNN).

12. Support de données lisible par ordinateur, sur lequel est enregistré le produit programme d'ordinateur (PRG2) selon la revendication 9.

[Fig 1]

SYS

MEM1

PRG1

CPU1 ←→ TNN

PRG2

QNN

[Fig 2]

LAY_I

D_CONV

B_NORM1

TNN ←

RELUX

SUCC_1

CONV_2D

B_NORM2

LAY_O

[Fig 3]

[Fig 4]

```
┌─────────────┐
│    LAY_I    │
└─────────────┘
       ┊
       ▼
┌─────────────┐  ┐
│   D_CONV    │  │
└─────────────┘  │
       ▼         │
┌─────────────┐  │
│    RELUX    │  ├ SUCC_2
└─────────────┘  │
       ▼         │
┌─────────────┐  │
│   CONV_2D   │  ┘
└─────────────┘
       ┊
       ▼
┌─────────────┐
│    LAY_O    │
└─────────────┘
```

[Fig 5]

```
┌─────────────┐
│    LAY_I    │
└─────────────┘
       ┊
       ▼
┌─────────────┐  ┐
│   D_CONV    │  │
└─────────────┘  │
       ▼         │
┌─────────────┐  │
│    CLP_L    │  ├ SUCC_3
└─────────────┘  │
       ▼         │
┌─────────────┐  │
│   CONV_2D   │  ┘
└─────────────┘
       ┊
       ▼
┌─────────────┐
│    LAY_O    │
└─────────────┘
```

[Fig 6]

Europäisches Patentamt

European Patent Office

Office européen des brevets

**RAPPORT DE RECHERCHE EUROPEENNE**

Numéro de la demande

EP 24 20 4356

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X,D | M. NAGEL ET AL.: "A White Paper on Neural Network Quantization", ARXIV.ORG, CORNELL UNIVERSITY LIBRARY, 201 OLIN LIBRARY CORNELL UNIVERSITY ITHACA, NY 14853, 15 juin 2021 (2021-06-15), XP081990169, * sections 2 et 3 * | 1-12 | INV. G06N3/0495 G06N3/048 G06N3/0464 ADD. G06N3/10 G06N3/063 |
| X | US 2021/224658 A1 (TEXAS INSTRUMENTS INC [US]) 22 juillet 2021 (2021-07-22) * alinéas [0012] - [0075] * | 1-12 | |
| A | S. SIDDEGOWDA ET AL.: "Neural Network Quantization with AI Model Efficiency Toolkit (AIMET)", ARXIV.ORG, CORNELL UNIVERSITY LIBRARY, 201 OLIN LIBRARY CORNELL UNIVERSITY ITHACA, NY 14853, 20 janvier 2022 (2022-01-20), XP091134194, * chapitre 4 * | 1-12 | |
| T | M. SANDLER ET AL.: "MobileNetV2: Inverted Residuals and Linear Bottlenecks", 2018 IEEE/CVF CONFERENCE ON COMPUTER VISION AND PATTERN RECOGNITION, IEEE, 18 juin 2018 (2018-06-18), pages 4510-4520, XP033473361, DOI: 10.1109/CVPR.2018.00474 * section 4 * | | |

DOMAINES TECHNIQUES RECHERCHES (IPC)

G06N

Le présent rapport a été établi pour toutes les revendications

| Lieu de la recherche | Date d'achèvement de la recherche | Examinateur |
|---|---|---|
| La Haye | 6 mars 2025 | Millet, Guillaume |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 24 20 4356

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

06-03-2025

| Document brevet cité au rapport de recherche | Date de publication | Membre(s) de la famille de brevet(s) | Date de publication |
|---|---|---|---|
| US 2021224658 A1 | 22-07-2021 | US 2021224658 A1 | 22-07-2021 |
| | | US 2024394543 A1 | 28-11-2024 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **MARKUS NAGEL et al.** *A White Paper on Neural Network Quantization*, 15 June 2021
- *A White Paper on Neural Network Quantization*, 15 June 2021